# EUROPÄISCHE PATENTANMELDUNG

(11) **EP 0 596 828 A1**
(43) Veröffentlichungstag der Anmeldung: **11.05.1994**
(21) Anmeldenummer: 93810438.7
(22) Anmeldetag: 18.06.1993
(51) Int. Cl.: G09F 9/35, G02F 1/1347

(54) **Anzeigevorrichtung**

(30) Priorität: 05.11.1992 CH 3436/92
(71) Anmelder: F & S Products, CH-9692 Bazenheid (CH)
(72) Erfinder: Fürthbauer, Rupert, CH-9620 Lichtensteig (CH); Schönholzer, Rudolf, CH-9620 Lichtensteig (CH)
(74) Vertreter: Frei, Alexandra Sarah

(57) **Zusammenfassung**

Um bei einer Vorrichtung zum Anzeigen von leuchtenden Bildern einerseits die Kontraste zu erhöhen und andererseits eine gute Zuverlässigkeit zu erreichen, wird ein Anzeigemodul vorgeschlagen, das zwei hintereinander in Serie geschaltete lichtsteuernde Elemente, bspw. Flüssigkristallelemente (11, 12) aufweist. Vor, zwischen und nach den Flüssigkristallelementen sind ferner vorzugsweise Polarisatoren (25, 26, 32, 36) so angeordnet, dass sie als verschachtelte Paare, "innere" und "äussere" Paare die Sperrwirkung gegen Licht wesentlich erhöhen.

## Beschreibung

Vorrichtung zum Anzeigen von selbstleuchtenden Bildern, dargestellt durch eine Matrix von lichtsteuerbaren Elementen, die auf einer Anzeigetafel angeordnet sind und über ein Anzeigemodul gesteuert lichtdurch- oder undurchlässig schaltbar sind, sowie Verfahren zur Steuerung des Lichtdurchgangs in einem Anzeigemodul einer Anzeigevorrichtung.

Vorrichtungen dieser Art findet man beispielsweise im Verkehr. Im Strassenverkehr dienen sie der Orientierung des Fahrzeuglenkers indem sie ihm Information über Richtungen oder erlaubte Geschwindigkeiten angeben oder indem sie ihn über zeitweise geschlossene Strassenabschnitte oder über Staus orientieren. Im Bahn- und Flugverkehr geben sie dem Fahrgast Abfahrts- und Ankunftszeiten und Ein- und Ausgänge an Gebäuden an, oder orientieren ihn über kurzfristig eingetretene Aenderungen im Verkehrsablauf. Immer sollen solche Anzeigen auf grosse Distanz gut sicht- und lesbar sein. Zudem sollen die angezeigten Informationen sehr kurzfristig verändert werden können und an die Funktionssicherheit werden natürlich hohe Anforderungen gestellt. Zur Anzeige gelangen hauptsächlich Schriften mit verschiedenen Schriftbildern, Symbole oder andere Bilder, die meistens graphisch vereinfacht sind.

Eine solche Vorrichtung ist aus dem Deutschen Gebrauchsmuster Nr. 81 24 380.4 bekannt. Bei dieser sogenannten Wechselanzeigeeinrichtung ist zwischen einer Lichtquelle und einer Anzeigetafel, welche durch Lichtleiterkabel verbunden sind, ein elektrisch ansteuerbarer, matrixartiger Flüssigkristallbaustein als Lichtventil angeordnet. Mit diesem Lichtventil können die einzelnen Lichtleiterkabel so belichtet werden, dass sich daraus ein Bild auf der Anzeigetafel ergibt.

Aus der DE-A-3 434 355 ist weiter eine Leuchtanzeigetafel bekannt, in die die Enden einer Vielzahl von Lichtleitern münden, die einzeln ansteuerbar sind. Die Ansteuerung geschieht hier über einen Verdunkler, der beispielsweise den Flüssigkristalleffekt ausnützt. In dieser Vorrichtung sind mehrere Verdunkler parallel angeordnet und in einer Verdunklereinheit zusammengefasst.

Obwohl solche Anzeigetafeln, bei denen Flüssigkristallelemente angesteuert werden, grosse Vorteile aufweisen, beispielsweise sind sie bezügliche Darstellung sehr flexibel und können eine grosse Anzahl von verschiedenen Symbolen anzeigen, ist ihr Einsatz doch beschränkt. Er beschränkt sich vor allen Dingen auf Anlagen kleiner Dimension, die dazu gedacht sind, Personen auf eher kurze Lese-Distanz zu informieren. Möchte man das Einsatzgebiet solcher Anzeigen vergrössern, indem man solche Anzeigen auch zur Information über wesentlich grössere Distanzen oder gar unter erschwerten Bedingungen benützt, so stellt sich insbesondere das Problem des mangelhaften Kontrastes. Denn, durch Flüssigkristallelemente angesteuerte Anzeigevorrichtungen weisen bekannterweise nicht sehr grosse Kontraste auf. Dies ist darauf zurückzuführen, dass eine abgedunkelte, also lichtgesperrte Flüssigkristallzone immer noch Licht im Verhältnis von ungefähr 1:100 bis 1:250 durchlässt. Das führt dazu, dass der Vorteil in bezug auf die Wahrnehmbarkeit der angezeigten Symbole, der daraus entsteht, dass man eine Anzeigetafel sehr gross dimensioniert, durch die geringen Kontraste wieder verloren geht. Gerade bei grossen Hinweis- und Werbetafeln müssen sehr starke Lichtquellen verwendet werden und gerade dort lassen die dunkelgeschalteten Bereiche der Anzeigetafel zuviel Licht durch. Bei Anzeigen, die im Freien aufgestellt sind kommen noch weitere Erschwernisse wie Nebel, Regen, Belichtung durch Gegenlicht, Verschmutzung usw. hinzu, die alle darauf hinwirken, die Kontraste zusätzlich zu verringern. Aus diesen Gründen hat man bei solchen Anzeigetafeln in vielen Fällen in die Lichtkanäle sogenannte mechanische Lichtventile eingesetzt, die beispielsweise aus mechanisch betätigten Klappen bestehen. Mit diesen mechanischen Lichtventilen ist eine sehr gute Kontrastwirkung wohl zu erreichen, dagegen ergibt sich eine relativ unzuverlässige "Gesamtanlage", da sie aus einer Vielzahl mechanisch angesteuerter Lichtventile besteht. Zuverlässigkeit ist aber bei solchen Anzeigen in der Regel wichtig. Deshalb ergibt sich in bezug auf den Stand der Technik ein Zielkonflikt derart, dass mechanische Lichtventile zwar gute Kontraste ergeben aber unzuverlässig sind und an sich zuverlässige Systeme mit Flüssigkristallzellen dagegen schlechte Kontraste aufweisen. Wünschbar wäre jedoch eine Anzeigevorrichtung, die gute Kontraste zusammen mit einer guten Zuverlässigkeit anbietet und ausserdem den Aussenverhältnissen, wie Tag, Nacht, Nebel, Regen und so weiter angepasst werden kann.

Die Erfindung, wie sie in den Patentansprüchen gekennzeichnet ist, löst die Aufgabe, eine Anzeigevorrichtung zu schaffen, die einerseits sehr zuverlässig arbeitet und andererseits starke Kontraste zwischen leuchtenden und nicht leuchtenden Zonen der Anzeige aufweisen und die über Regelstufen den entsprechenden Helligkeitserfordernissen angepasst werden kann.

Diese Aufgabe wird mit der erfindungsgemässen Vorrichtung dadurch gelöst, dass die Anzeigevorrichtung ein Anzeigemodul mit mindestens zwei Flüssigkristallzellen aufweist, die in Serie hintereinander geschaltet sind, so dass das Licht, das von einer Lichtquelle ausgesendet wird, durch mindestens zwei korrelierte Flüssigkristallzellen hindurchgeführt wird, wobei (bspw. zwischen zwei Zellen) polarisierende Mittel derart geschaltet sind, dass sie optische Ungenauigkeiten in der Erzeugung linear polarisiertes Lichtes kompensieren. Dadurch wird eine exakt definierte Lichtsteuerung möglich. Je nach Stärke der geforderten Kontraste sind zwei oder mehr solcher Mittel (zwischen den Flüssigkristallzellen) eingesetzt. Sind mehrere polarisierende Elemente angeordnet, so sind sie so linear zueinander verdreht angeordnet, dass das eine polarisierende Element das Licht in einer ersten Ebene bzw. in einer ersten Schwingungsrichtung polarisiert und das andere oder weitere nachgeschaltete polarisierende Element/e das Licht in einer zweiten oder nächsten Ebene in einer nächstadäquaten Schwingungsrichtung polarisiert bzw. polarisieren. In der Regel sind die Winkel zwischen den aufeinanderfolgenden Schwingungsebenen klein bis sehr klein, wenn sie Restlicht mindern sollen. Die Flüssigkristallelemente werden so angesteuert, dass jede Stelle davon, die hell oder dunkel geschaltet werden kann, in beiden bzw. allen Flüssigkristallelementen gleichzeitig hell oder dunkel geschaltet wird, so dass für das Licht aus der Lichtquelle Bereiche oder Lichtkanäle entstehen, über die es die Flüssigkristallzellen durchqueren kann. Dort wo das Licht keinen solchen offenen Kanal hat, wird es durch zwei oder mehr polarisierenden und in Serie geschalteten Elemente maximal abgeschwächt. Da die Anzeigevorrichtung viele solcher Lichtkanäle neben- und übereinander aufweist entsteht ein sehr starker Kontrast zwischen hellen und dunklen Bereichen auf der Anzeigetafel.

In einem bspw. derart ausgebildeten Anzeigemodul wird die Schwingungsebene des durchgeleiteten Lichtes in einer ersten Flüssigkristallzellen-Einheit um einen ersten Winkel und in einer zweiten oder nächsten Flüssigkristallzellen-Einheit um einen zweiten oder weiteren Winkel derart gedreht, dass eine maximale Abdunklung durch Sperrung von praktisch allem durch optische Fehler entstandenen Restlichtes bewirkt wird. Damit werden vor, zwischen und nach den Flüssigkristallzellen Vorzugsrichtungen für die Schwingung des Lichtes bestimmt, die nicht miteinander übereinstimmen. Mit zusätzlichen Polarisatoren kann das Licht noch klarer auf diese Vorzugsrichtungen ausgerichtet werden. Sind die Flüssigkristallelemente für einen solchen Lichtkanal so geschaltet, dass sie Licht sperren, so fällt die genannte Drehung des Lichtes weg und das Licht kann nicht durch den ganzen Lichtkanal propagieren. Die genannten Polarisatoren verstärken diese Sperrwirkung durch Restlichtminderung und erhöhen damit den Kontrast zwischen sperrenden und leitenden Lichtkanälen.

Die durch die Erfindung erreichten Vorteile sind insbesondere darin zu sehen, dass damit grossdimensionierte und kontraststarke Anzeigen geschaffen werden können, die eine einfache und zuverlässige Ansteuerung haben, wie dies eben mit Flüssigkristallelementen möglich, mit mechanischen Elementen aber in diesem Ausmass nicht möglich ist (bspw. bei schwankenden klimatischen Verhältnissen), und dadurch auch bezüglich Anzeige flexibel sind und schnelle Darstellungswechsel zulassen. Bei solchen Anzeigeeinheiten kann auch auf das Anbringen von Blenden oder Abdeckungen verzichtet werden, mit denen störendes Licht oder auch Schmutz von der Anzeige ferngehalten werden soll. Durch die beliebige Erhöhung der Kontrastwirkung, können auch beliebig starke Lichtquellen eingesetzt werden, einerseits, um den Lichtverlust auszugleichen und andererseits, um noch stärker leuchtende Anzeigen mit sehr hohem Kontrast zu schaffen. Bei der erfindungsgemässen Vorrichtung können Abdunkelungsverhältnisse von 1:100 bis 1: 250 auf 1:4000 bis 1:1'000'000 verbessert werden. Zudem sind Lichtquellen mit Leuchtdichten von weit über 100'000 cd/m2 einsetzbar, deren Leuchtdichte mit der erhöhten Kontrastfähigkeit vorteilhaft ausgenützt wird. Vorzugsweise wird als Lichtquelle eine Xenonlampe verwendet, was bisher wegen Einhaltung der Brennparameter und der dadurch bedingen Nichtregelbarkeit nur mit zusätzlichen aufwendigen Mitteln möglich war.

Bei solchen Anzeigeeinheiten ergibt sich ein erster, man kann sagen, geräteinnerer Bereich, in dem das Licht im Prinzip immer parallel zur Hauptachse des Lichtstrahlbündels gerichtet von einem Element, z.B. dem Anzeigemodul, auf das andere Element, z.B. einem Lichtleiter, übertragen wird. Dieser Bereich umfasst praktisch den gesamten Weg des Lichtes innerhalb der Anzeigevorrichtung. In einem zweiten Bereich, man kann sagen, geräteäusseren Bereich, der im wesentlichen den Weg zwischen der Anzeigetafel und dem Auge eines Betrachters Anzeigetafel umfasst, sind auch Lichtwege bedeutsam, die nicht mehr parallel zur "Lichtachse" verlaufen, also einen grossen Lesewinkel zulassen. Beispielsweise wird eine solche Anzeige oft von unten oder von der Seite her, also stark gegen die Lichtachse geneigt abzulesen versucht. Bei der hier diskutierten Technik können die Ablesbarkeit aus verschiedenen Lesewinkeln durch zusätzliche Elemente auf der Anzeigetafel und der Kontrast durch Elemente innerhalb der Anzeigevorrichtung getrennt voneinander optimiert werden.

Im folgenden wird die Erfindung anhand eines Ausführungsbeispieles näher erläutert. Es zeigt:
- Figur 1: eine Ausführung der erfindungsgemässen Vorrichtung im Schnitt.
- Figur 2: einen Teil der Vorrichtung gemäss Figur 1 in perspektivischer Darstellung.
- Figur 3: eine Prinzipdarstellung des erfindungsgemässen Verfahrens zur Steuerung von Licht in sogenannten Lichtkanälen.

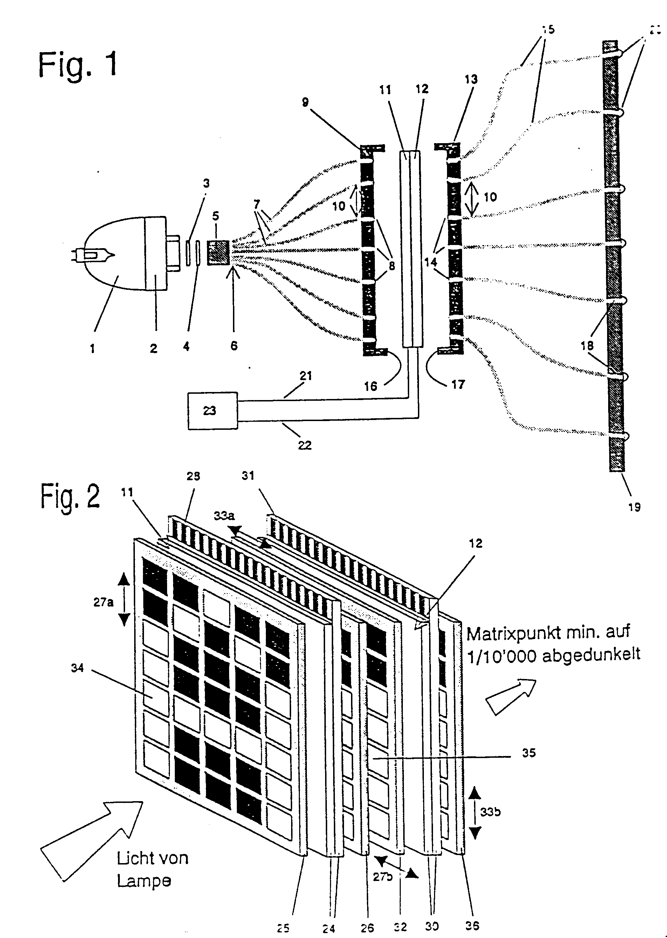

Figur 1 zeigt eine erfindungsgemässe Vorrichtung in ihrer Gesamtheit mit einer Lichtquelle 1, welche beispielsweise aus einer Halogenlampe mit sehr hoher Leuchtdichte, vorzugsweise einer Xenon-Lampe mit noch höherer Leuchtdichte besteht. Die Lichtquelle ist in einem Montagering 2 gelagert. Der Lichtquelle 1 in Richtung Strahlengang nachgeschaltet ist ferner ein Wärmeschutzfilter 3 und (bei Bedarf) ein Farbfilter 4. Eine Aufnahmevorrichtung 5 für Enden 6 einer Anzahl Lichtleiter 7 ist gleichachsig mit der Lichtquelle 1 und den Filtern 3 und 4 angeordnet. Enden 8 derselben Lichtleiter 7 sind mit einem Montagerahmen 9 verbunden, hier in Abständen 10, welche der Teilung der ansteuerbaren Elemente eines nachfolgend angeordneten Systems von lichtsteuernden Elementen z.B. Flüssigkristallzellen 11,12 entsprechen. Je nach Verwendungszweck ist diese Teilung oder Matrix verschieden. Sie entspricht den Abständen oder Längen die solche ansteuerbaren Elemente zueinander haben sollen. Bei Matrixpunkten geht es somit um die Abstände zwischen den Zentren dieser Elemente oder eben der kleinsten ansteuerbaren Flächen in der Zelle. Das System besteht im wesentlichen aus einer Aufeinanderfolge von aufeinander abgestimmten Lichtsteuerelementen. Hier sind es unmittelbar benachbarte Flüssigkristallzellen 11,12 mit gleichem Aufbau. Dabei sollen die kleinsten ansteuerbaren Flächen oder Zonen in beiden Flüssigkristallzellen gleiche Form, gleiche Abmessungen und gleiche oder verschiedene Orientierung haben. Jenseits des lichtsteuernden Systems erkennt man einen weiteren Montagerahmen 13, in den Enden 14 von Lichtleitern 15 eingesetzt sind. Diese weisen die gleiche Anordnung und die gleichen Abstände 10 wie die Enden 8 der Lichtleiter 7 im Montagerahmen 9 auf. Im montierten Zustand sind beide Montagerahmen 9 und 13 so zusammengeschoben, dass die Flächen 16 und 17 aneinander stossen und die Flüssigkristallelemente 11 und 12 mit weiteren optischen Mitteln dadurch wie eingeschlossen festgehalten werden. Das Ganze bildet ein Anzeigemodul. Die anderen Enden 18 der Lichtleiter 15 sind in einer Anzeigetafel 19 befestigt und weisen bezüglich der Ausgangsmatrix proportional vergrösserte Abstände zueinander auf. In der Anzeigetafel 19 sind die Lichtleiter 15 an lichtlenkende End-Elemente 20 angeschlossen. Solche lichtlenkende Elemente 20 können als Linsen oder andere optische Teile, die das Licht aus den Lichtleitern flächig verteilen, dispergieren oder fokussieren, ausgebildet sein.

Das System mit den lichtsteuernden Elementen 11 und 12, z.B. Flüssigkristallzellen, ist über Steuer- und Speiseleitungen 21 und 22 an eine Steuereinheit 23 angeschlossen. Solche Steuereinheiten 23 sind an sich bekannt und dazu ausgebildet, die einzelnen ansteuerbaren Elemente in den Flüssigkristallzellen 11 und 12 hell oder dunkel, für Licht durchlässig oder sperrend, zu steuern. Sie sind auch fähig, aus einer einfachen Eingabe die Steuersignale für die einzelnen Elemente zu generieren, so dass ein sinnvolles Gesamtbild von alphanumerischen Zeichen oder Symbolen zu einem Gesamtbild entsteht.

In der Figur 2 ist das System mit den Flüssigkristallzellen 11 und 12 näher gezeigt. Die Flüssigkristallzelle 11 weist, schematisch dargestellt, zwei einen mit Flüssigkristall gefüllten Spalt bildende Glasplatten 24 auf, denen ein Paar polarisierende Elemente 25 und 26 vor- und/oder nachgeschaltet ist. Solche polarisierende Elemente sind beispielsweise bekannte Polarisationsfilter, die das Licht in einer Ebene bzw. Richtung polarisieren, die hier durch Pfeile 27a und 27b beispielsweise angegeben ist. Dabei sollen beide Polarisatoren 25 und 26 nicht in der gleichen Richtung polarisieren bzw. entsprechend ausgerichtet sein. Beispielsweise stehen die Pfeile 27a und 27b wie hier gezeigt orthogonal zueinander (gekreuzte Polarisatoren, entsprechend dem "positive mode"). An den Glasplatten 24 sind elektrische Anschlüsse 28 vorgesehen, die auf eine der Steuerung 23 führen. Die Flüssigkristallzelle 12 weist den gleichen Aufbau auf; Glasplatten 30 mit Anschlüssen 31 und ein Paar vor und/oder nachgeschalteter polarisierender Elemente 32 und 36, die hier das Licht nochmals in einer Richtung polarisieren, wie dies Pfeile 33a und 33b angeben. Die Richtungen oder Pfeile 33a und 33b stehen ebenfalls vorzugsweise orthogonal zueinander (entsprechend dem "positive mode"). Entsprechend dem Negativ- und Positiv-Mode kann eine invertierte Abbildung erzielt werden (schwarz auf weiss bzw. weiss auf schwarz).

Auf den Flüssigkristallelementen 11 und 12 erkennt man einzelne ansteuerbare Elemente 34 und 35, die hier als Beispiel so angesteuert sind, dass sie zusammen den Buchstaben A bilden. Diese ansteuerbaren Elemente 34 und 35 sind hier einfachheitshalber auf die polarisierenden Elemente 25, 26, 32 und 36 projiziert. Sie werden aber durch die Flüssigkristallzellen 11 und 12 erzeugt. Die mit den Bezugszeichen 21 bis 36 bezeichneten Elemente, oder vereinfacht gesagt, die beiden Flüssigkristallelemente 11 und 12 mit den Polarisatoren und der Ansteuereinheit 23 bilden zusammen ein Anzeigemodul.

Die beiden Systemeinheiten 11 und 12 "verschachteln" sich sozusagen durch ein "inneres Paar" von Polarisatoren 26,32, deren Schwingungsebenen nur soweit verdreht sind, um zwischeninstanzlich Restlicht zu blockieren, das trotz der vorinstanzlichen Massnahme der Systemeinheit 11 mit den Elementen 25,24,26 mit einem "äusseren Paar" von Polarisatoren entstanden ist. Die Verdrehung der Schwingungsebenen des inneren Paares zueinander ist sehr klein, vorzugsweise um die 0°, die Verdrehung der Schwinungsebenen des äusseren Paares zueinander ist sehr gross, vorzugsweise um die 90° (positive mode). Das innere Paar kann, um den schliesslichen Kontrast noch weiter zu erhöhen, zu einem Tripel erweitert werden, wobei durch erhöhte Lichtstärke, welche man bei schlechtem Kontrast ja stets vermeidet, Absorptionsverluste kompensiert werden können. Das nachfolgende, wiederum äussere Paar von Polarisatoren 32,36 der Systemeinheit 12 mit den Elementen 32,30,36 sperrt ankommendes Licht in der oben geschilderten Weise. Bei ausserordentlich hohen Leuchtdichten setzt man diese Kette fort, wobei der Sperreffekt und damit der Kontrast zunimmt.

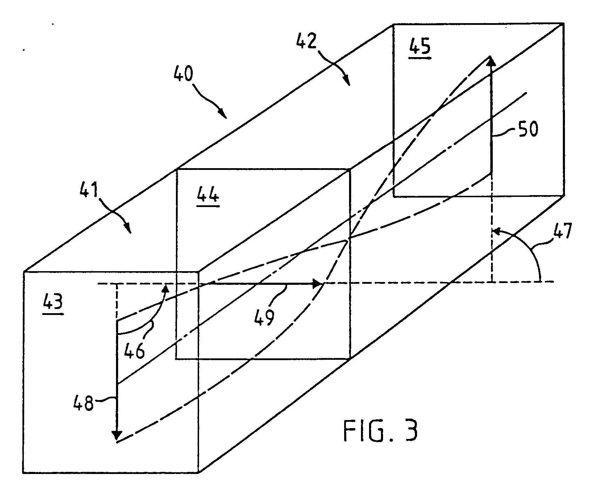

Figur 3 zeigt die verfahrensmässige Prinzipdarstellung eines steuerbaren Lichtkanals 40, wie er in der Matrix eines Anzeigemoduls mehrfach vorhanden ist und durch die einzelnen ansteuerbaren Elemente 34 und 35 gebildet und abgegrenzt wird. Solch ein Lichtkanal weist einen ersten Eintrittsabschnitt 41 und einen zweiten (oder mehr) Extinktionsabschnitt 42 auf, die durch Grenzflächen 43, 44 und 45 abgegrenzt sind. Der erste Abschnitt 41 entspricht etwa demjenigen Teil des Lichtkanales der im Flüssigkristallelement 11 verläuft und der zweite Abschnitt 42 entspricht dem Teil, der im Flüssigkristallelement 12 verläuft. Beide Flüssigkristallelemente 11 und 12 weisen eine Vielzahl solcher Lichtkanäle auf. Die Schwingungsebene des Lichtes wird im ersten Abschnitt 41 um einen ersten Winkel 46 gedreht. Im zweiten Abschnitt 42 um einen zweiten Winkel 47 gedreht. Dies, wenn der Lichtkanal 40 Licht leiten soll. Soll er dies nicht, so findet keine Drehung statt. Indem man die Grenzflächen 43, 44 und/oder 45 polarisierend ausbildet, wird das eintreffende Licht auf der Grenzfläche 43 in einer Schwingungsebene 48, auf der Grenzfläche 44 in einer Schwingungsebene 49 und auf der Grenzfläche 45 in einer Schwingungsebene 50 polarisiert. Damit wird eine Sperrwirkung erzielt. Sie wird erhöht, wenn die Grenzfläche 44 so ausgebildet wird, dass Restlicht, das die gekreuzten Polarisatoren der Grenzflächen 43/44 mit der dazwischenliegenden aber durchlässigen Flüssigkristallschicht durchlassen, oder besser gesagt, miterzeugen helfen, zusätzlich gesperrt wird. Ein minimaler, polarisierter Lichtanteil, der die Grenzschicht 44 in seiner Schwingungebene durchtritt, wird nach dem Durchtreten durch die ebenfalls durchlässige Flüssigkristallschicht, welche wiederum einen, diesmal noch weniger wirksamen optischen Fehler einbringt, durch den nächsten gekreuzten Polarisator der Grenzschicht 45 gesperrt und so fort. Jedes "innere Paar" von Polarisatoren, bspw. Uebergangsstelle 44, mit im wesentlichen gleichgerichteten Schwingungsebenen, filtert vagabundierendes Licht in hohem Masse aus und trägt zur markanten Erhöhung des Kontrastes bei. Je grösser die Leuchtdichte, umso grösser das Kontrastverhältnis, der durch eine Kaskadierung von solchen Paaren möglich ist. Der für den Durchtritt des Lichtes offene Kanal entsteht entweder durch elektrisch bewirkte Drehung der Schwingungsebene beim Durchtritt durch die Flüssigkristallschicht, entsprechend dem mode parallelen Polarisatoren, sodass das austretende Licht in der Durchlass-Ebene des inneren Paares schwingt und in die nächste Flüssigkristallschicht eindringen kann, oder durch entsprechend dem mode gekreuzten Polarisatoren ohne Ansteuerung der Zelle.

Zum Betreiben der Vorrichtung, d.h. zum Anzeigen eines Symbols werden nun die einzelnen ansteuerbaren Elemente beider Flüssigkristallelemente 11 und 12 durch die Ansteuereinheit 23 so zueinander angesteuert, dass beide das gleiche Symbol darstellen, beispielsweise den Buchstaben A, wie er durch Pixel dargestellt ist, und zwar so, dass der Buchstabe auch gleich ausgerichtet und orientiert ist. So entstehen für das Licht, das durch die Lichtleiter 7 zugeführt wird, eine Anzahl offener Lichtkanäle (Pixels), die Licht durchlassen und eine Anzahl geperrter Lichtkanäle (Pixels), die das Licht nicht durchlassen. Bei einem offenen Lichtkanal bilden hintereinandergeschaltete Elemente oder Pixels 34 und 35 einen ungehinderten Durchgang für das Licht, so dass es durch beide Flüssigkristallelemente 11 und 12 hindurchdringen kann. Damit erreicht es die Lichtleiter 15 und damit auch die Anzeigetafel 19. Die übrigen, hier nicht einzeln sichtbargemachten ansteuerbaren Elemente der Flüssigkristallelemente 11 und 12 sperren den Durchgang für das Licht, das ihnen durch die ihnen zugeordneten Lichtleiter 7 zugeführt wird. Damit auch die Helligkeit verschiedenen Erfordernissen angepasst werden kann, kann das lichtabdunkelnde Element, hier ein LCD, in Stufen oder auch stufenlos geregelt werden, indem die Lichtdurchlässigkeit mittels variierbarer Spannungsansteuerung und/oder mittels variierbarer Frequenzansteuerung geregelt wird. Dies hat ausserdem den grossen Vorteil, dass die Lampenbetriebsspannung, die wegen der Lebensdauer der Lampe möglichst nicht verändert werden soll, unbeeinflusst bleibt und dass auch keine mechanischen Mittel zur Helligkeitsdämpfung wie einschwenkbare Filter oder Irisblenden usw. eingesetzt werden müssen.

Das durch die Lichtleiter 7 aus der Lichtquelle 1 kommende Licht wird auf dem polarisierenden Element 25 in einer Ebene polarisiert, wie sie durch den Doppelpfeil 27a angegeben ist. Dieses polarisierte Licht tritt durch das Flüssigkristallelement 11 und wird dabei in seiner Schwingungsrichtung in eine andere Ebene gedreht. Nach dem Durchtreten durch das Flüssigkristallelement 11 schwingt das Licht in einer Ebene, wie sie der Doppelpfeil 27b angibt, also um 90° gedreht. Anschliessend durchläuft es die polarisierenden Elemente 26 und 32, die beide das Licht in der gleichen Ebene bzw. in der Richtung der Pfeile 27b und 33a polarisieren. Hier wird vom ersten Polarisationsfilter austretendes Licht, das nicht in der Ebene dieses Polarisators schwingt, vom gleichsinnig nachgeschalteten Polarisator zurückgehalten. Um noch mehr unpolarisiertes Licht (vagabundierendes Restlicht) abzufangen, könnte, nimmt man eine weitere Abschwächung der Lichtstärke in Kauf, ein weiterer gleichsinnig wirkender Polarisator nachgeschaltet werden, wodurch das Kontrastverhältnis nochmals erhöht würde. In der nachfolgenden Flüssigkristallzelle 12 wird das Licht wieder gedreht und tritt, in einer Ebene schwingend aus, wie sie durch den Pfeil 33b angegeben ist. Ist der Lichtkanal gesperrt, so findet (positive mode vorausgesetzt) in den Flüssigkristallelementen keine Drehung des Lichtes statt (bei negative mode erfolgt eine Drehung des Lichtes in der Zelle). Da die polarisierenden Elemente 25 und 26 sowie 32 und 36 jeweils das Licht gemäss den Richtungen 27a und 27b sowie 33a und 33b, die senkrecht zueinander stehen, polarisieren, wird das Licht ein erstes Mal durch die Elemente 25 und 26 und ein zweites Mal durch die Elemente 32 und 36 gesperrt, wobei zusätzlich durch das gleichgerichtete "innere Paar" Restlicht eliminiert wird.

Handelsübliche Flüssigkristallzellen sind bereits mit polarisierenden Elementen ausgestattet, die auf mindestens einer der Aussenflächen 24 oder 30 aufgebracht sind. Die hier gezeigten Polarisatoren 25, 26, 32, 36 sind auch als solche bereits integrierte Polarisatoren aufzufassen. Bei solchen Flüssigkristallzellen mit integrierten Polarisatoren sind dann die beiden ganzen Zellen so gegeneinander verdreht, dass die Polarisationsebenen des äusseren und des inneren Paares nicht voneinander abweichen. Dies bedeutet dann auch, dass die Ansteuerung beider Zellen gleich sein muss, damit übereinstimmende Symbole entstehen. Es ist ebenfalls möglich mehr als zwei Flüssigkristallzellen mit Polarisatoren hintereinander zu schalten. Dann wird der Kontrast weiter erhöht. Die weitere Zelle oder mindestens deren Polarisator muss dann zu der vorhergehenden Zelle ebenfalls verdreht sein, so dass die Polarisationsebenen parallel sind.

Da in solchen Flüssigkristallelementen immer eine Dämpfung des Lichtes erfolgt, ist es vorteilhaft, die Querschnitte der Lichtleiter 7, die das Licht zuführen kleiner auszubilden als die Querschnitte der Lichtleiter 15 die das Licht wegführen, bspw. 1:6. Ein- und Ausgang der Lichtleiter zum und vom LCD können auch mit einem Linsensystem verbunden sein, zwecks Vermeidung von Lichtstreuverlusten. Wichtig ist auch die genaue Ausrichtung der Polarisatoren zueinander. In gleicher Richtung polarisierende Elemente 26 und 32 sollen so zueinander stehen, dass der Lichtdurchlass maximal ist. In verschiedener Richtung polarisierende Elemente 25 und 26 sowie 32 und 36 sollen möglichst genau so zueinander ausgerichtet werden, dass der Lichtdurchlass minimal ist. Auch aus der Berechnung der jeweiligen Lichtdämpfung hervorgehende Werte, die nur auf geringe Unterschiede bezüglich Lichtdurchlass hindeuten, wirken sich in der Praxis erstaunlich stark aus, d.h. der menschliche Betrachter einer Anzeige erkennt auch dann noch erhebliche subjektive Unterschiede. Wenn diese Feinheiten beachtet werden, so lassen sich für das Licht in einem sperrenden Lichtkanal eines solchen Anzeigemoduls Dämpfungen von 1/1'000'000 erreichen. Eine etwas geringere Dämpfung wird dann erreicht, wenn beispielsweise eines der polarisierenden Elemente 26 oder 32 weggelassen, das heisst, dass statt ein "inneres Paar" lediglich ein Polarisator verwendet wird. Dies kann auch darin bestehen, dass die Elemente 26 und 32 zusammengefasst werden. Eine weitere Einbusse ergibt sich natürlich, wenn diese Elemente überhaupt weggelassen sind.

Es gibt ferner verschiedenartigste Flüssigkristallelemente, die in einer solchen Vorrichtung angewendet werden können. Es ist beispielsweise unerheblich, ob die Flüssigkeit im Element elektrisch, mechanisch, magnetisch oder sogar thermisch beeinflusst wird. Es ist auch möglich durch bestimmte Flüssigkeiten und Polfilter Farbwirkungen zu erzeugen. Stehen Flüssigkristallelemente zur Verfügung, die bereits an sich eine hohe Sperrwirkung für das Licht erreichen, bzw. bei denen der Unterschied zwischen der Sperrwirkung und der Lichtleitung oder Lichtdurchlass gross genug ist, so kann auf einige polarisierenden Elemente verzichtet werden. Flüssigkristalle, die das völlige Weglassen von Polarisatoren mit gleich hohem Kontrastergebnis erlauben würde, sind bis jetzt nicht bekannt.

Das Verfahren zur Steuerung eines Lichtstrahles in einem Anzeigemodul einer Anzeigevorrichtung zeichnet sich dadurch aus, dass eine Schwingungsebene eines eintretenden Lichtstrahles in einem Lichtkanal 40 in einem ersten Abschnitt 41 um einen ersten Winkel 46 und anschliessend in einem folgenden Abschnitt 42 um einen weiteren Winkel 47 so gedreht wird, dass für den Durchlass des Lichtes aufeinanderfolgende Drehungen sich um einen Winkel von 90° versetzen und für die Sperrung die Drehung um einen Winkel um 0° versetzt werden, wobei durch zwischengeschaltete Mittel entstehendes Restlicht nur in einer Schwingungsebene, welche im wesentlichen die Hauptaustrittsebene ist, durchlassen. Zur Verringerung von Restlicht werden bspw. zwei Polarisatoren hintereinander geschaltet und in ungefähr die gleiche Schwingungsrichtung (im wesentlichen 0° zueinander gekreuzt) zueinander gedreht werden. Der Lichtstrahl zwischen dem ersten und dem zweiten Abschnitt weist ein ein inneres Polarisationsfilterpaar auf mit im wesentlichen 0°- Drehung von Licht ausserhalb der Hauptschwingungsebene befreit wird.

Das Verfahren bietet weiter die Möglichkeit dass der Lichtdurchlass von jedem einzelnen Element 34,35 oder Lichtkanal verschiedenen Erfordernissen angepasst wird, indem das/die lichtabdunkelnde/n Element/e in Stufen oder auch stufenlos geregelt werden, indem die Lichtdurchlässigkeit mittels variierbarer Spannungsansteuerung und/oder mittels variierbarer Frequenzansteuerung geregelt wird. Beispiel: zwei hintereinandergeschaltete Elemente 34,35, die einen Lichtkanal für ein Pixel bilden, können je auf 8 Stufen variierbar ausgelegt werden (bspw. 2 Volt durch 8), sodass der Pixel über 16 Helligkeits- oder Lichtdurchlass-Stufen gesteuert werden kann (dies statt 2 Volt durch 16, was schwieriger zu beherrschen wäre).

Das Verfahren bietet ferner dass die lichtabdunkelnden Elemente 34,35 verschiedener lichtsteuernder Elemente derart anzeigekorrelliert gesteuert werden, dass dedizierte Lichtkanäle entstehen, deren lichtabdunkelnde Elemente einem übergeordneten Pixel (bspw. beim in Figur 2 abgebildeten Buchstaben A) zugeordnet sind sich aber einzeln und in Stufen abdunkeln lassen.

Das Anzeigemodul kann bezüglich seinem Verhalten beim Ausfall der Ansteuereinheit 23, je nach Wunsch, zwei Betriebsarten aufweisen. In einer ersten Betriebsart lassen alle Lichtkanäle das Licht durch und in einer zweiten Betriebsart sperren alle Lichtkanäle das Licht. Das kann aber zur Folge haben, dass Symbole auf der Anzeigeeinheit im einen Fall dunkel auf hellem Grund und im anderen Fall hell auf dunklem Grund erscheinen.

Da bei der Anzeigevorrichtung gemäss Erfindung mit polarisiertem Licht gearbeitet wird, könnte man sich vorstellen, dass ein Polarisationsbrillenträger unter Umständen das Bild einer solchen Anzeige nicht gleich erkennen kann wie ohne Brille. Dem ist aber nicht so; durch die Austrittsoptik, Glasfaser, Linse etc. wird das Licht wieder vollständig depolarisiert, sodass man nur von einer geräteinneren Polarisation sprechen kann.

## Patentansprüche

1. Vorrichtung zum Anzeigen von leuchtenden Bildern, dargestellt durch eine matrixartige Vielzahl von leuchtenden und nichtleuchtenden Elementen (20), die auf einer Anzeigetafel (19) angeordnet sind und über ein Anzeigemodul (11,12) feldweise belichtbar sind, wobei im Anzeigemodul mindestens zwei bezüglich der Felder anzeigekorreliert hintereinander geschaltete lichtsteuernde Elemente (11 und 12), sowie ein-, durch- und austretendes Licht in Schwingungsebenen definierende Mittel (11,12,25,26,32,36) vorgesehen sind.

2. Vorrichtung nach Anspruch 1, dadurch gekennzeichnet, dass das Anzeigemodul (11,12) Flüssigkristallzellen als lichtsteuernde Elemente und/oder ein-, durch- und austretendes Licht in Schwingungsebenen definierende Mittel aufweist.

3. Vorrichtung nach Anspruch 2, dadurch gekennzeichnet, dass aufeinanderfolgende Flüssigkristallzellen (11, 12) zur Beeinflussung der Schwingungsebene des Lichtes mindestens auf einer Seite je ein polarisierendes Element (25, 26, 32, 36) aufweisen, wobei das polarisierende Element (25, 26) der einen Flüssigkristallzelle (11) Licht in einer ersten Schwingungsebene (27) polarisiert und das polarisierende Element (32, 36) der anderen Flüssigkristallzelle (12) Licht in einer Schwingungsrichtung (33) polarisiert, die mit der ersten Schwingungsebene (27) parallel ist und abweichen kann.

4. Vorrichtung nach einem der Ansprüche 1,2 oder 3, dadurch gekennzeichnet, dass mindestens zwei Paare von Mitteln (25,26,32 oder 26,32,36) zur Drehung des Lichtes in bestimmte Schwingungsebenen derart vorgesehen sind, dass je ein Mittel (26 oder 32) des einen Paares (25,26 oder 26,32 oder 32,36) Mittel des anderen Paares (26,32 oder 32,36) ist, wobei das eine Paar (25,26) einen sehr grossen Winkel (ca. 90°, positive mode) zwischen den Schwingungsebenen und das andere Paar (26,32) einen sehr kleinen Winkel (ca. 0°) zwischen den Schwinungsebenen aufweist, oder beide Paare einen sehr kleinen Winkel (ca. 0°, negative mode) aufweisen.

5. Vorrichtung nach Anspruch 3, dadurch gekennzeichnet, dass mindestens eine Flüssigkristallzelle (11,12) zwei polarisierende Elemente (25,26 oder 32,36) aufweist.

6. Vorrichtung nach einem der Ansprüche 2 bis 5, dadurch gekennzeichnet, dass jede Flüssigkristallzelle eine gleiche Anzahl gleich angeordneter, feldweise ansteuerbarer Elemente (34, 35 bzw. Lichtkanäle) aufweist.

7. Vorrichtung nach einem der Ansprüche 2 bis 6, dadurch gekennzeichnet, dass jede Flüssigkristallzelle (11,12) einzeln ansteuerbar ist und entsprechende ansteuerbare Elemente (34,35 bzw. Lichtkanäle) darin gemeinsam Licht durchlassend oder gemeinsam sperrend gesteuert werden bzw. einzeln, nichtgemeinsam zur graduellen Steuerung jedes Lichtkanals gesteuert werden können.

8. Vorrichtung nach einem der Ansprüche 1 bis 7, dadurch gekennzeichnet, dass dem Anzeigemodul eine Lichtquelle (1) über Lichtleiter (7) vorgeschaltet ist.

9. Vorrichtung nach Anspruch 8, dadurch gekennzeichnet, dass dem Anzeigemodul ein Filter (3, 4) vorgeschaltet ist.

10. Vorrichtung nach einem der Ansprüche 8 oder 9, dadurch gekennzeichnet, dass die Lichtquelle eine Xenon-Lampe ist.

11. Verfahren zur Steuerung eines Lichtstrahles in einem Anzeigemodul einer Anzeigevorrichtung, dadurch gekennzeichnet, dass eine Schwingungsebene eines eintretenden Lichtstrahles in einem Lichtkanal (40) in einem ersten Abschnitt (41) um einen ersten Winkel (46) und anschliessend in einem folgenden Abschnitt (42) um einen weiteren Winkel (47) so gedreht wird, dass für den Durchlass des Lichtes aufeinanderfolgende Drehungen sich um einen Winkel von 90° versetzen und für die Sperrung die Drehung um einen Winkel um 0° versetzt werden, wobei durch zwischengeschaltete Mittel entstehendes Restlicht nur in einer Schwingungsebene, welche im wesentlichen die Hauptaustrittsebene ist, durchlassen.

12. Verfahren nach Anspruch 11, dadurch gekennzeichnet, dass zur Verringerung von Restlicht zwei Polarisatoren hintereinander geschaltet und in ungefähr die gleiche Schwingungsrichtung (im wesentlichen 0° zueinander gekreuzt) zueinander gedreht werden.

13. Verfahren nach Anspruch 11, dadurch gekennzeichnet, dass der Lichtstrahl zwischen dem ersten und dem zweiten Abschnitt durch ein inneres Polarisationsfilterpaar mit im wesentlichen 0°-Drehung von Licht ausserhalb der Hauptschwingungsebene befreit wird.

14. Verfahren nach einem der Ansprüche 11 bis 13, dadurch gekennzeichnet, dass der Lichtdurchlass von jedem einzelnen Element (34,35) oder Lichtkanal verschiedenen Erfordernissen angepasst wird, indem das/die lichtabdunkelnde/n Element/e in Stufen oder auch stufenlos geregelt werden, indem die Lichtdurchlässigkeit mittels variierbarer Spannungsansteuerung und/oder mittels variierbarer Frequenzansteuerung geregelt wird.

15. Verfahren nach einem der Ansprüche 11 bis 14, dadurch gekennzeichnet, dass die lichtabdunkelnden Elemente (34,35) verschiedener lichtsteuernder Elemente derart anzeigekorrelliert gesteuert werden, dass dedizierte Lichtkanäle entstehen, deren lichtabdunkelnde Elemente einem übergeordneten Pixel zugeordnet sind sich aber einzeln und in Stufen abdunkeln lassen.
